**Europäisches Patentamt**

**European Patent Office**

**Office européen des brevets**

(19)

(11) Veröffentlichungsnummer : **0 078 940**
**B1**

(12)
# EUROPÄISCHE PATENTSCHRIFT

(45) Veröffentlichungstag der Patentschrift :
09.09.87

(21) Anmeldenummer : 82109583.3

(22) Anmeldetag : 16.10.82

(51) Int. Cl.⁴ : **B 60 R 22/18**

(54) Vorrichtung zur Führung oder Umlenkung eines Bandes, insbesondere für einen Sicherheitsgurt in einem Kraftfahrzeug.

(30) Priorität : 10.11.81 DE 3144527

(43) Veröffentlichungstag der Anmeldung :
18.05.83 Patentblatt 83/20

(45) Bekanntmachung des Hinweises auf die Patenterteilung : 09.09.87 Patentblatt 87/37

(84) Benannte Vertragsstaaten :
FR GB IT SE

(56) Entgegenhaltungen :
GB-A- 2 062 446
US-A- 3 959 855
US-A- 4 211 432
Die Akte enthält technische Angaben, die nach dem Eingang der Anmeldung eingereicht wurden und die nicht in dieser Patentschrift enthalten sind.

(73) Patentinhaber : Klippan G.m.b.H Sicherheitsgeräte
Kohfurth 15 Postfach 1280
D-2000 Hamburg 3/Norderstedt (DE)

(72) Erfinder : Nitschke, Hans Joachim
Am Sportfield 6
D-2359 Stuvenborn (DE)

(74) Vertreter : Weber, Dieter, Dr. et al
Dr. Dieter Weber und Klaus Seiffert Patentanwälte
Gustav-Freytag-Strasse 25 Postfach 6145
D-6200 Wiesbaden 1 (DE)

## Beschreibung

Die Erfindung betrifft eine Vorrichtung zur Führung oder Umlenkung eines Bandes, insbesondere für einen Sicherheitsgurt in einem Kraftfahrzeug, bestehend aus einem Blechträger mit einem Befestigungsloch und einer im Abstand daneben angeordneten länglichen Ausnehmung zur Aufnahme des Bandes, wobei die Ausnehmung mit Gleitmaterial versehen ist.

Auf dem Gebiet der Sicherheitsgurte für Kraftfahrzeuge sind zahlreiche Umlenkbeschläge als Vorrichtung zur Führung oder Umlenkung von Bändern, bei dieser Anwendung : Sicherheitsgurtbänder, bekannt. Diese können verschiedene Konstruktionen haben, z. B. mehr oder weniger längliche Stahlringe oder ausgestanzte Platten als Blechträger aufweisen. Solche Umlenkbeschläge benötigt man insbesondere bei den automatischen Gurtaufrollern, die eine langsame Bewegung des Insassen und damit ein langsames Herausziehen des Gurtbandes von der Aufwickelwelle erlauben, im Unfallmoment bzw. bei großer Beschleunigung aber ein Sperren des Aufrollers dahingehend bewirken, daß das Gurtband nicht weiter herausgezogen werden kann und daher den Insassen im Unfallmoment schützt. Bei den langsamen Bewegungen des Insassen wird Gurtband laufend durch den Umlenkbeschlag in der einen oder anderen Richtung durchgezogen. Häufig befinden sich die Gurtaufroller im Bodenbereich des Fahrzeuges, während das Gurtband, insbesondere der Schultergurt, von oben über die Schulter des Insassen zu dessen Hüftbereich hin geführt werden muß. Infolgedessen benötigt man einen Umlenkbeschlag, der vorzugsweise am Türpfosten oder sogenannten B-Pfosten angebracht ist.

Als Umlenkbeschläge verwendete Bleche oder Rundstähle werden zur Vermeidung von Korrosion, zur Verringerung der Reibung und zum besseren Aussehen verchromt.

Eine Vorrichtung der eingangs genannten Art ist aus der US-A-39 59 855 bekannt, bei welcher die das Band aufnehmende längliche Ausnehmung mit Kunststoff versehen ist. Dadurch versucht man, eine möglichste günstige µ-Wertpaarung, d. h. eine geringe Reibung des Gurtbandes einerseits und des Umlenkbeschlages andererseits zu erreichen. Der dort verwendete spritzfähige Kunststoff (Nylon) hat aber nicht die gewünschten Gleiteigenschaften.

Der bekannte Umlenkbeschlag weist eine Ausnehmung von vergleichsweise komplizierter äußerer Form auf. Weiterhin werden auf die Kanten dieser Ausnehmung außerordentlich komliziert geformte Spritzgußteile aus Nylon aufgesetzt, deren Herstellung aufwendig und teuer ist und für die man vergleichsweise viel Material verbraucht. Schließlich müssen in einem relativ aufwendigen Arbeitsgang drei einzelne Spritzgußteile, von denen mindestens zwei eine unterschiedliche Form aufweisen, nacheinander einzeln in die Ausnehmung eingesetzt werden. Polytetrafluoräthylen käme trotz seiner guten Gleiteigenschaften als Material für derartige Spritzgußteile nicht in Frage, da es nicht genügend formstabil ist.

Aufgabe der Erfindung ist daher die Verbesserung der bekannten Führungs- oder Umlenkvorrichtung der eingangs genannten Art, die sehr preiswert hergestellt werden kann, einfacheren Aufbau hat und bei der ein leichteres Gleiten oder Abrollen des Gurtbandes möglich ist.

Diese Aufgabe wird gemäß der Erfindung dadurch gelöst, daß die durch Ausstanzen und Umbördeln gebildete Ausnehmung eine mit einer gekrümmten Oberfläche versehene Umlenkfläche aufweist und daß auf der gekrümmten Oberfläche ein einziger Körper aus Gleitmaterial befestigt ist. Über diese Umlenkfläche läuft die großflächige Seite des Gurtbandes. Bei geeigneter Auswahl des Gleitmaterials kann man die oben erwähnte µ-Wertpaarung besonders günstig einstellen.

Durch einen einfachen Stanzvorgang, bei dem in einem Blechträger drei Schnitte in Form eines an einer langen Seite offenen länglichen Rechteckes angebracht werden, werden durch Umbiegen des so an drei Seiten gelösten Blechteiles gleichzeitig die Ausnehmung und die gekrümmte Umlenkfläche gebildet. Ein einziger Körper aus Gleitmaterial, welcher auf dem Blechteil befestigt werden soll, kann z. B. die Form eines länglichen U-Profiles haben, welches in geeigneter Länge abgeschnitten und auf das Blechteil aufgesteckt wird. Wiederholt man den gleichen Vorgang mit den schmalen Seitenteilen der Ausnehmung, so erhält man in weiterer vorteilhafter Weise gleichzeitig seitliche Anlaufflächen mit ebenfalls gekrümmter Oberfläche, welche eine Beschädigung der Gurtkante vermeiden helfen.

Als sehr zweckmäßig hat sich erwiesen, wenn das Gleitmaterial gemäß der Erfindung Polytetrafluoräthylen oder Polyäthylen ist. Die Art des Stoffes für das Gleitmaterial wird sich nach dem Material des Gurtbandes richten, ob dieses z. B. ein Polyesterband oder ein Polyamidband ist. In jedem Falle läßt sich eine sehr geringe Reibung µ erreichen, wenn ein solches Band über eine Kunststoffschicht oder einen entsprechend geformten Kunststoffkörper gleitet.

Eine weitere zweckmäßige Möglichkeit eröffnet sich, wenn bei weiterer Ausgestaltung der Erfindung der einzige Körper aus Gleitmaterial, der auch schichtförmig ausgebildet sein kann, ein vorgefertigtes Profilteil ist. Dieses wird z. B. mit Vorteil aus einer Extrudiermaschine entnommen und nach einer entsprechenden Bemessung seiner Länge über die gekrümmte Oberfläche der Umlenkfläche aufgeschnappt. Das Aufschnappen, Anclipsen und Festklemmen gelingt in wenig arbeitsintensiver Weise und gewährleistet eine ausreichende Festigkeit, so daß ein sowohl schnell als auch langsam und in beiden Richtungen über diese mit Kunststoff beschichtete Oberfläche hinweglaufendes Band den einzigen Körper oder Schicht aus Gleitmaterial nicht aus ihrer Verankerung bewegen kann. Zweckmäßigerweise kann man ein rohrähnliches Profil extrudieren, wobei das Rohr an einer Längsseite sozusagen aufgeschlitzt extrudiert wird. Entsprechende umgreifende Teile des extrudierten Profils hintergreifen Endkanten der Umlenkfläche und werden auf diese Weise an letzterer festgelegt. Das Ummanteln der Umlenkfläche ist auf diese Weise besonders einfach zu bewerkstelligen.

Vorteilhaft ist es gemäß der Erfindung auch, wenn an den Schmalseiten der länglichen Ausnehmungen quer zur Umlenkfläche umgebördelte Anlaufflächen mit gekrümmter Oberfläche vorgesehen sind. Bei den Anlaufflächen handelt es sich ähnlich wie bei der Umlenkfläche um eine Art Laschen oder Lappen, die aus der Ebene des Blechträgers herausgebogen werden mit dem Vorteil, möglicherweise unterschiedliche Krümmungen vorzusehen. Allerdings verläuft die Krümmung der Umlenkfläche in einer Richtung etwa quer zur Krümmung der Anlaufflächen. Die sogenannten Anlaufflächen kommen im Betrieb der Vorrichtung als Umlenkbeschlag neben den Rand des durchzuführenden Gurtbandes zu liegen. Bei Verwendung entsprechender Krümmungsradien, vorzugsweise großer Radien und damit kleiner Krümmung, wird die gefürchtete Kantenverschmelzung des Gurtbandes vermieden. Die Kante des Gurtbandes wird durch die neuen Anlaufflächen geeigneter Krümmung in günstiger und gleichmäßiger Weise geschont.

Durch das Ausstanzen und Umbördeln des Blechträgers zur Bildung der Ausnehmung kann man eine einfache Technologie einsetzen und erhebliche wirtschaftliche Vorteile dieser auch in Massenfabrikation gut herstellbaren Vorrichtung erzielen. Die Krümmung der Oberfläche, über welche das Band geführt bzw. umgelenkt wird, kann variabel gestaltet werden. Dadurch kann der Einsatz als Umlenkbeschlag den gewünschten Randbedingungen beim Einbau ohne Schwierigkeit angepaßt werden. Die Fläche der länglichen Ausnehmung wird durch einen U-förmigen Stanzschnitt an dem Blechträger auf einer Seite stehen gelassen und lediglich über die U-förmigen Schnitte aus der Ebene des Blechträgers herausgebördelt. Hierbei sind je nach Herstellung bzw. Bördelungsvorgang Oberflächen mit unterschiedlicher Krümmung in einfacher Weise erreichbar.

Das in Form eines speziell gestalteten Körpers, vorzugsweise aus Kunststoff, kann man sowohl an die Umlenkfläche, über welche das Gurtband breit hinüberläuft, oder aber auch an die oben beschriebene Anlauffläche, an welcher die Kante des Gurtbandes vorbeiläuft, anclipsen oder aufschnappen. Entweder verwendet man die gleiche Technologie zur Ummantelung der Anlaufflächen, wie zum Ummanteln der größerflächigen Umlenkflächen, wenn dies gewünscht ist, oder man kann das extrudierte Kunststoffprofilteil nach seiner Ablängung unter Anpassung an die betreffende längliche Ausnehmung seitlich mit Schlitzen zur Bildung von Umlenklaschen versehen, die sich teilweise sogar auch an die umgebördelten Anlaufflächen legen lassen.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen

Figur 1 die Draufsicht auf eine Vorrichtung als Umlenkbeschlag ohne Abdeckkappe nach dem Ausstanzen und Umbördeln der Umlenkfläche,

Figur 2 eine Querschnittsansicht des Blechträgers der Fig. 1, an dem außerdem die Abdeckkappe angesetzt ist und ein abgebrochen gezeigtes Stück Gurtband durchgeführt ist,

Figur 3 eine Draufsicht auf die Darstellung der Fig. 1, wenn man in letzterer von oben nach unten blickt, und

Figur 4 perspektivisch eine andere Ausführungsform eines Umlenkbeschlages, bei welchem die Schicht aus Gleitmaterial durch Aufschnappen und Festklemmen eines durch Extrudieren erzeugten rohrähnlichen Profilteiles an der Umlenkfläche festgelegt ist.

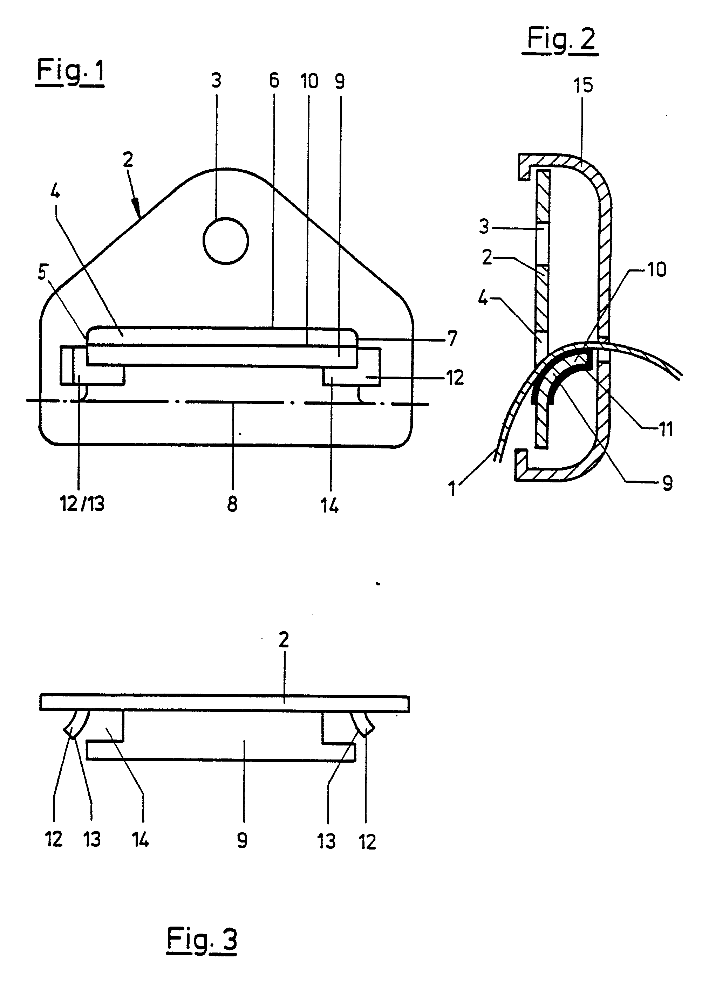

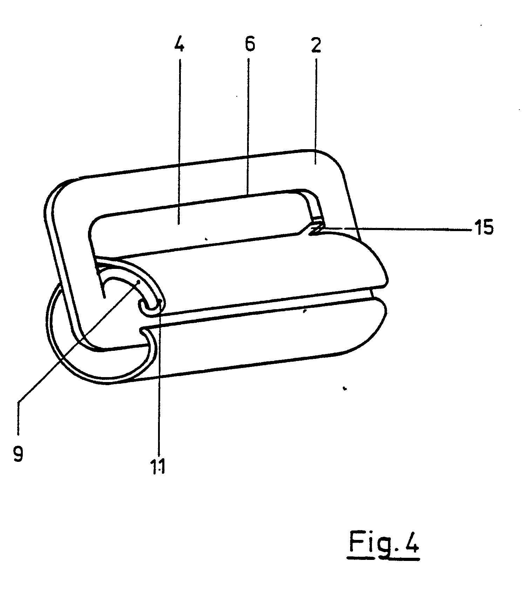

Die Führungs- oder Umlenkvorrichtung ist in den Figuren als Umlenkbeschlag eines Sicherheitsgurtes 1 dargestellt, den man deutlich in Fig. 2 sieht. Der allgemein mit 2 bezeichnete Blechträger ist aus einem 2 oder 3 mm dicken Stahlblech durch Ausstanzen und teilweises Umbördeln erstellt. Das Befestigungsloch 3, welches bei der Ausführungsform der Fig. 4 wegen der abgebrochenen Darstellung nicht gezeigt ist, wird in bekannter Weise durch Ausstanzen erhalten.

Im Abstand von diesem Befestigungsloch 3 befindet sich die längliche Ausnehmung 4 für die Aufnahme des Gurtbandes 1. Diese wird durch drei U-förmig angeordnete Stanzlinien 5, 6 und 7 erstellt, so daß die sich hierdurch ergebende Lasche um die in Fig. 1 strichpunktiert gezeigte Linie 8 nach außen (vor die Papierebene der Fig. 1) bzw. in Fig. 2 nach rechts in die dort gezeigte Position umgebördelt werden kann. Hierdurch ergibt sich die Umlenkfläche 9, die hier als Körper betrachtet wird und mit der gekrümmten Oberfläche 10 versehen ist. Bei der Betrachtung der vorstehenden Ausführungsformen ist die Oberfläche 10 dem körperlichen Teil der Umlenkfläche 9 zuzuordnen. Darüber ist die Schicht 11 aus Gleitmaterial aufgespritzt oder durch Clipsen oder Aufschnappen befestigt.

In den Fig. 1 und 3 sind an den Schmalseiten der länglichen Ausnehmung 4, also an den durch die Stanzschnittlinien 5 und 7 gelegenen Seiten, die Anlaufflächen 12 zu erkennen, die ebenfalls durch Ausstanzen und Umbördeln erstellt und mit einer gekrümmten Oberfläche 13 versehen sind. Nach dem Ausstanzen hinterlassen sie in der Umlenkfläche 9 für die Funktion unwesentliche Ausnehmungen 14.

Bei der Montage wird der Blechträger 2 neben der Tür, dem Pfosten oder an einer anderen gewünschten Stelle durch Verschrauben oder dergleichen befestigt. Danach wird die Abdeckkappe 15 in bekannter Weise aufgesetzt und das Gurtband 1 durchgezogen. Es ist dann die in Fig. 2 gezeigt Position erreicht.

Die Ausführungsform der Fig. 4 ist der nach den Fig. 1 bis 3 sehr ähnlich. Dort ist allerdings die Schicht 11 aus Gleitmaterial, in diesem Falle Polytetrafluoräthylen, als rohrähnliches Profilteil durch Extrudieren vorgefertigt und auf die gewünschte Länge der länglichen Ausnehmung 4 zurechtgeschnitten. Man erkennt das Festklemmen der Kunststoffschicht 11 aus Gleitmaterial mit Hilfe hakenförmiger Verlängerungen sowie Festlegen mittels seitlicher Ankerlaschen 15.

**Patentansprüche**

1. Vorrichtung zur Führung oder Umlenkung eines Bandes, insbesondere für einen Sicherheitsgurt in einem Kraftfahrzeug, bestehend aus einem Blechträger (2) mit einem Befestigungsloch (3) und einer in Abstand daneben angeordneten länglichen Ausnehmung (4) zur Aufnahme des Bandes (1), wobei die Ausnehmung mit Gleitmaterial versehen ist, dadurch gekennzeichnet, daß die durch Ausstanzen und Umbördeln gebildete Ausnehmung (4) eine mit einer gekrümmten Oberfläche (10) versehene Umlenkfläche (9) aufweist und daß auf der gekrümmten Oberfläche (10, 13) ein einziger Körper (11, 20) aus Gleitmaterial befestigt ist.

2. Vorrichtung nach Anspruch 1, dadurch gekennzeichnet, daß das Gleitmaterial Polytetrafluoräthylen ist.

3. Vorrichtung nach Anspruch 1 oder 2, dadurch gekennzeichnet, daß der einzige Körper (11, 20) aus Gleitmaterial ein vorgefertigtes Profilteil ist.

4. Vorrichtung nach einem der Ansprüche 1 bis 3, dadurch gekennzeichnet, daß an den Schmalseiten der länglichen Ausnehmung (4) quer zur Umlenkfläche (9) umgebördelte Anlaufflächen (12) mit gekrümmter Oberfläche (13) vorgesehen sind.

**Claims**

1. A device for guiding or diverting a belt, in particular for a safety belt in a motor vehicle, comprising a sheet metal carrier (2) having a fixing hole (3) and an elongate opening (4) which is arranged at a spacing therebeside, for receiving the belt (1), the opening being provided with slip material, characterised in that the opening (4) which is formed by stamping out and flanging over has a diverting face (9) provided with a curved surface (10) and that a single body (11, 20) of slip material is fixed on the curved surface (10, 13).

2. A device according to claim 1 characterised in that the slip material is polytetrafluorœthylene.

3. A device according to claim 1 or claim 2 characterised in that the single body (11, 20) of slip material is a prefabricated shaped member.

4. A device according to one of claims 1 to 3 characterised in that provided at the narrow sides of the elongate opening are run-on faces (12) which are flanged over transversely with respect to the diverting face (9) and which have a curved surface (13).

**Revendications**

1. Dispositif de guidage ou de renvoi d'une sangle, notamment pour une ceinture de sécurité dans un véhicule automobile, constitué par un support en tôle (2) possédant un trou de fixation (3) et un évidement allongé (4) disposé à une certaine distance à côté du trou de fixation servant à recevoir la sangle (1), l'évidement étant équipé d'un matériau facilitant le glissement, caractérisé en ce que l'évidement (4), qui est formé par découpage et rabattement au niveau des bords, possède une surface de renvoi (9) possédant une surface cintrée (10), et en ce qu'un corps unique (11, 20) constitué en un matériau facilitant le glissement est fixé sur la surface cintrée (10, 13).

2. Dispositif selon la revendication 1, caractérisé en ce que le matériau facilitant le glissement est du polytétrafluoroéthylène.

3. Dispositif selon la revendication 1 ou 2, caractérisé en ce que le corps unique (11, 20) réalisé en un matériau facilitant le glissement est une pièce profilée préfabriquée.

4. Dispositif selon l'une quelconque des revendications 1 à 3, caractérisé en ce que des surfaces d'attaque (12) possédant une surface cintrée (13) qui sont rabattues transversalement par rapport à la surface de renvoi (9), sont prévues sur les petits côtés de l'évidement allongé (4).

Fig. 1

Fig. 2

Fig. 3

Fig. 4